# EUROPEAN PATENT APPLICATION

(11) **EP 2 597 718 A1**
(43) Date of publication of application: **29.05.2013**
(21) Application number: 11809677.5
(22) Date of filing: 20.07.2011
(51) Int. Cl.: H01M 10/0569, H01M 10/052, H01M 10/0568

(54) **NON-AQUEOUS ELECTROLYTE FOR SECONDARY BATTERIES, AND SECONDARY BATTERY**

(30) Priority: 21.07.2010 JP 2010164067
(71) Applicant: Asahi Glass Company, Limited, Tokyo 100-8405 (JP)
(72) Inventor: ONOZAKI, Yu, Tokyo 100-8405 (JP); IWAYA, Masao, Tokyo 100-8405 (JP)
(74) Representative: Müller-Boré & Partner Patentanwälte
(86) International application number: PCT/JP2011/066487
(87) International publication number: WO 2012/011507

(57) **Abstract**

To provide a non-aqueous electrolyte solution for secondary batteries, which has a long term flame retardancy and which is excellent in cycle properties particularly under high voltage conditions and in high rate charge/discharge properties, and a secondary battery using such a non-aqueous electrolyte solution for secondary batteries. A non-aqueous electrolyte solution for secondary batteries, comprising a lithium salt and a solvent for dissolving the electrolyte salt, which comprises a specific hydrofluoroether, a specific ether compound and a specific carbonate compound, wherein the ratio (Nₒ/N_{Li}) of the total number of moles (No) of etheric oxygen atoms derived from the above ether compound to the total number of moles (N_{Li}) of lithium atoms derived from the lithium salt, contained in the solvent for dissolving the electrolyte salt, is more than 1 and at most 6; and a secondary battery using such a non-aqueous electrolyte solution for secondary batteries.

## Description

### TECHNICAL FIELD

The present invention relates to a non-aqueous electrolyte solution for secondary batteries, and a secondary battery.

### BACKGROUND ART

As a solvent for a non-aqueous electrolyte solution for secondary batteries, a carbonate type compound such as ethylene carbonate or dimethyl carbonate, has been widely used in that it usually dissolves a lithium salt excellently to provide a high lithium ion conductivity, and it has a wide potential window.

As a method to increase non-flammability (flame retardancy) without deteriorating the performance as a non-aqueous electrolyte, it has been proposed to add a fluorinated solvent (Patent Documents 1 to 3). However, the fluorinated solvent has a low ability to dissolve the electrolyte salt and tends to deteriorate the rate characteristics.

On the other hand, it has been reported that lithium salts such as CF₃ SO₂ N(Li)SO₂ CF₃ and FSO₂ N(Li)SO₂F exhibit a strong interaction with etheric oxygen atoms of a glyme type solvent to form a stable 1:1 complex, and from the results of e.g. the thermal analysis, such a complex exhibits a behavior as if it were a single ion species and was not ignitable at all even by heating by a burner (Non-Patent Documents 1 and 2). Further, as examples wherein a complex of a lithium salt and a glyme type solvent, is used for an electrolyte solution, a non-aqueous electrolyte solution comprising LiBF₄ and 1-ethoxy-2-methoxyethane (Patent Document 4) and a non-aqueous electrolyte solution comprising (CF₃ SO₂)₂ NLi and tetraglyme (Patent Document 5) are disclosed.

However, when an electrolyte solution containing the 1:1 complex of the lithium salt and the glyme type solvent as disclosed in Non-Patent Documents 1 and 2 was evaluated by the present inventors, it was found to have a high viscosity and low conductivity, and thus to be not practically useful. Further, also non-aqueous electrolyte solutions disclosed in Patent Documents 4 and 5 were found to likewise have low conductivity and to be not practically useful.

Therefore, in order to lower the viscosity of the non-aqueous electrolyte solution and to improve the conductivity, an electrolyte solution has been reported wherein a glyme complex comprising a lithium salt and a glyme type solvent, such as LiPF₆ and a cyclic perfluorosulfonimide, is dissolved in a hydrofluoroether (Patent Document 6).

When the secondary battery using the non-aqueous electrolyte solution in Patent Document 6 is subjected to charge and discharge at a high rate (at a large amount of current) (e.g. charge and discharge at 2.0 C, where 1 C represents such a current value that a standard capacity of a battery is discharged in one hour), the energy density and the battery capacity tend to decrease. Further, the cycle properties may deteriorate under a high voltage of e.g. 4.5 V.

Further, for the purpose of improving the solubility of an electrolyte salt such as LiPF₆, it has been reported to add a cyclic non-fluorinated carbonate and a chain-structured non-fluorinated ether to an electrolyte solution using a fluorinated solvent (Patent Document 7). However, the electrolyte solution disclosed in Patent Document 7 has a problem that in charge and discharge at a high rate, the energy density and the battery capacity sometimes tend to be low. Further, the cycle properties sometimes deteriorate under a high voltage of e.g. 4.5 V. Further, the flame retardancy sometimes deteriorates.

### PRIOR ART DOCUMENTS

### PATENT DOCUMENTS

Patent Document 1: JP-A-08-037024
Patent Document 2: JP-A-2001-052737
Patent Document 3: JP-A-11-307123
Patent Document 4: Japanese Patent No. 4405779
Patent Document 5: JP-A-2009-245911
Patent Document 6: WO2009/133899
Patent Document 7: JP-A-2008-218387

### NON-PATENT DOCUMENTS

Non-Patent Document 1: Summaries of presentations at 47th Symposium on Batteries in 2006 1 F06
Non-Patent Document 2: Summaries of presentations at 75th Elecetrochemical Society of Japan in 2008 3D09

### DISCLOSURE OF INVENTION

### TECHNICAL PROBLEM

It is an object of the present invention to provide a non-aqueous electrolyte solution for secondary batteries, which has a long term flame retardancy and which is excellent in cycle properties particularly under high voltage conditions and in high rate charge/discharge properties, and a secondary battery using such a non-aqueous electrolyte solution for secondary batteries.

### SOLUTION TO PROBLEM

In order to solve the above problem, the present invention has adopted the following constructions.
[1] A non-aqueous electrolyte solution for secondary batteries, comprising a lithium salt (I) and a solvent (II), wherein
   the solvent (II) comprises at least one compound (II-1) selected from the group consisting of a compound represented by the following formula (1) and a compound represented by the following formula (2), a compound (II-2A) represented by the following formula (3A), and a cyclic carbonate compound (II-3) having no carbon-carbon unsaturated bond, and
   the ratio (N₀/N_{Li}) of the number of moles (No) of etheric oxygen atoms derived from the compound (II-2A) contained in the electrolyte solution to the number of moles (N_{Li}) of lithium atoms derived from the lithium salt (I) contained in the electrolyte solution, is more than 1 and at most 6:

   R¹-O-R² (1)

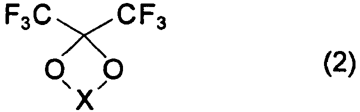

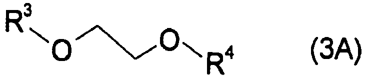

   wherein each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having an etheric oxygen atom between carbon-carbon atoms, or a C₁₋₁₀ fluorinated alkyl group having an etheric oxygen atom between carbon-carbon atoms, provided that at least one of R¹ and R² is a group containing fluorine atom(s),
   X is a C₁₋₅ alkylene group, a C₁₋₅ fluorinated alkylene group, a C₁₋₅ alkylene group having an etheric oxygen atom between carbon-carbon atoms, or a C₁₋₅ fluorinated alkylene group having an etheric oxygen atom between carbon-carbon atoms, and
   each of R³ and R⁴ which are independent of each other, is a C₁₋₅ alkyl group, or R³ and R⁴ are linked to each other to form a C₁₋₁₀ alkylene group.
[2] The non-aqueous electrolyte solution for secondary batteries according to [1], wherein said N₀/N_{Li} is from 1.2 to 3.8.
[3] The non-aqueous electrolyte solution for secondary batteries according to [1] or [2], wherein the ratio (N_{II-3}/N_{Li}) of the number of moles (N_{II-3}) of the compound (II-3) to the total number of moles (N_{Li}) of lithium atoms derived from the lithium salt (I), contained in the electrolyte solution, is from 0.1 to 5.
[4] The non-aqueous electrolyte solution for secondary batteries according to any one of [1] to [3], wherein the ratio [(No+ N_{II-3})/ N_{Li}] of the sum (No+ N_{II-3}) of the number of moles (No) of etheric oxygen atoms derived from the compound (II-2A) and the number of moles (N_{II-3}) of the compound (II-3), to the total number of moles (N_{Li}) of lithium atoms derived from the lithium salt (I), contained in the electrolyte solution, is from 2 to 6.
[5] The non-aqueous electrolyte solution for secondary batteries according to any one of [1] to [4], wherein the ratio (N_{II-3}/N_{Li}) of the total number of moles (N_{II-3}) of the compound (II-3) to the total number of moles (N_{Li}) of lithium atoms derived from the lithium salt (I), contained in the electrolyte solution, is from 0.1 to 5.
[6] The non-aqueous electrolyte solution for secondary batteries according to any one of [1] to [5], wherein the amount of the compound (II-1) in the solvent (II) is from 40 to 85 vol% based on the total volume of the solvent (II).
[7] The non-aqueous electrolyte solution for secondary batteries according to any one of [1] to [6], wherein the amount of the compound (II-2A) in the solvent (II) is from 6 to 25 vol% based on the total volume of the electrolyte solution.
[8] The non-aqueous electrolyte solution for secondary batteries according to any one of [1] to [7], wherein the amount of the compound (II-3) in the solvent (II) is from 5 to 30 vol% based on the total volume of the solvent (II).
[9] The non-aqueous electrolyte solution for secondary batteries according to any one of [1] to [8], wherein the molar amount of the lithium salt (I) based on the total volume of the electrolyte solution is from 0.1 to 3.0 mol/L.
[10] The non-aqueous electrolyte solution for secondary batteries according to any one of [1] to [9], wherein the compound (II-1) is CF₃CH₂OCF₂CF₂H, CHF₂CF₂CH₂OCF₂CF₂H, CF₃CF₂CH₂OCF₂CHF₂, CF₃CH₂OCF₂CHFCF₃, or CHF₂CF₂CH₂OCF₂CFHCF₃.
[11] The non-aqueous electrolyte solution for secondary batteries according to any one of [1] to [10], wherein in the compound (II-2A), each of R³ and R⁴ which are independent of each other, is a methyl group or an ethyl group.
[12] The non-aqueous electrolyte solution for secondary batteries according to any one of [1] to [11], wherein the compound (II-3) is propylene carbonate, ethylene carbonate, butylene carbonate, 4-chloro-1,3-dioxolan-2-one, 4-fluoro-1,3-dioxolan-2-one or 4-trifluoromethyl-1,3-dioxolan-2-one.
[13] The non-aqueous electrolyte solution for secondary batteries according to any one of [1] to [12], wherein the lithium salt (I) is LiPF₆, a compound represented by the following formula (5), (FSO₂)₂NLi, (CF₃SO₂)₂NLi, (CF₃CF₂SO₂)₂NLi, LiClO₄, a compound represented by the following formula (6), a compound represented by the following formula (7), or LiBF₄: 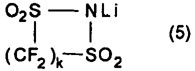 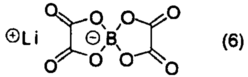 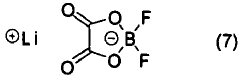 wherein k is an integer of from 1 to 5.
[14] A lithium ion secondary battery using, as its electrolyte solution, the non-aqueous electrolyte solution for secondary batteries as defined in any one of [1] to [13].
[15] A lithium ion secondary battery comprising a negative electrode made of a material capable of absorbing and desorbing lithium ions, metal lithium or an lithium alloy, a positive electrode made of a material capable of absorbing and desorbing lithium ions, and the non-aqueous electrolyte solution for secondary batteries as defined in any one of [1] to [13].

### ADVANTAGEOUS EFFECTS OF INVENTION

By using the non-aqueous electrolyte solution for secondary batteries of the present invention, it is possible to obtain a secondary battery which has a long term flame retardancy and which is excellent in cycle properties particularly under high voltage conditions and in high rate charge/discharge properties.

### BRIEF DESCRIPTION OF DRAWINGS

Fig. 1 is a graph showing the results of evaluation of the energy density retention ratio in Examples 38 and 39.
Fig. 2 is a graph showing discharge capacity/voltage curves at the time of discharging at the respective discharge rates in Example 38.
Fig. 3 is a graph showing discharge capacity/voltage curves at the time of discharging at the respective discharge rates in Example 39.

### DESCRIPTION OF EMBODIMENTS

### <Non-aqueous electrolyte solution for secondary batteries>

The non-aqueous electrolyte solution for secondary batteries of the present invention (hereinafter referred to simply as "the non-aqueous electrolyte solution") is an electrolyte solution comprising the after-described lithium salt (I) and the solvent (II), wherein the solvent (II) comprises the compound (II-1), the compound (II-2) and the compound (II-3). A non-aqueous electrolyte solution means an electrolyte solution using a solvent containing substantially no water, and it is an electrolyte solution such that even if it contains water, the amount of water is within such a range that performance degradation of a secondary battery using the non-aqueous electrolyte solution is not observed. The amount of water contained in such a non-aqueous electrolyte solution is preferably at most 500 mass ppm, more preferably at most 100 mass ppm, particularly preferably at most 50 mass ppm, based on the total mass of the electrolyte solution. The lower limit of the amount of water is 0 mass ppm.

Hereinafter, in this specification, a compound represented by the formula (1) will be referred to as a compound (1), unless otherwise specified, and the same applies to compounds represented by other formulae.

### [Lithium salt (I)]

The lithium salt (I) is an electrolyte which will be dissociated in the non-aqueous electrolyte solution to supply lithium ions. As the lithium salt, any lithium salt may be used without any particular restriction as long as it is one useful as an electrolyte for an electrolyte solution. Specifically, the lithium salt (I) is preferably at least one member selected from the group consisting of LiPF₆, the following compound (5), (FSO₂)₂ NLi, (CF₃SO₂)₂NLi, (CF₃CF₂ SO₂)₂ NLi, LiClO₄, the following compound (6), the following compound (7) and LiBF₄, further preferably LiPF₆, LiBF₄ and the compound (5).

Among them, as the lithium salt (I), it is more preferred to use a lithium salt consisting essentially of LiPF₆. In a case where a lithium salt consisting essentially of LiPF₆ is used as the lithium salt (I), LiPF₆ contained in the lithium salt (I) is preferably at least 40 mass%, more preferably at least 60 mass%, most preferably at least 80 mass%, in the total amount of the lithium salt (I). It is also preferred to use LiPF₆ alone. Further, in a case where LiPF₆ is essential, a lithium salt to be used in combination is preferably the compound (5) (particularly the compound (5) wherein k is 2), LiBF₄ or the compound (6). Other preferred embodiments may be use of LiBF₄ alone, use of one or more types of the compound (5), or combined use of LiBF₄ and the compound (5)

Further, other examples of a combination of the lithium salts include a combination of LiPF₆ and (FSO₂)₂ NLi, a combination of LiPF₆ and (CF₃ SO₂)₂ NLi, a combination of LiPF₆ and (CF₃ CF₂ SO₂)₂ NLi, a combination of LiPF₆ and the compound (7), a combination of LiPF₆ and LiClO₄, a combination of LiPF₆, the compound (5) and (FSO₂)₂ NLi, a combination of LiBF₄ and (FSO₂)₂ NLi, a combination of LiBF₄ and (CF₃ SO₂)₂ NLi, a combination of LiBF₄ and (CF₃ CF₂ SO₂)₂ NLi, a combination of LiBF₄ and the compound (6), a combination of LiBF₄ and the compound (7), a combination of LiBF₂ and LiClO₄, a combination of the compound (5) and (FSO₂)₂ NLi, a combination of the compound (5) and (CF₃ SO₂)₂ NLi, a combination of the compound (5) and (CF₃ CF₂ SO₂)₂ NLi, a combination of the compound (5) and the compound (6), a combination of the compound (5) and the compound (7), a combination of the compound (5) and LiClO₄, a combination of LiPF₆, LiBF₄ and (FSO₂)₂ NLi, a combination of LiPF₆, LiBF₄ and (CF₃ SO₂)₂ NLi, a combination of LiPF₆, LiBF₄ and (CF₃ CF₂ SO₂)₂ NLi, a combination of LiPF₆, LiBF₄ and the compound (6), a combination of LiPF₆, LiBF₄ and the compound (7), a combination of LiPF₆, LiBF₄ and LiClO₄, a combination of LiPF₆, the compound (5) and (FSO₂)₂ NLi, a combination of LiPF₆, the compound (5) and (CF₃ SO₂)₂ NLi, a combination of LiPF₆, the compound (5) and (CF₃ CF₂ SO₂)₂ NLi, a combination of LiPF₆, the compound (5) and LiClO₄: 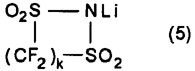 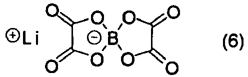 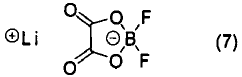 wherein k in the compound (5) is an integer of from 1 to 5.

Examples of the compound (5) include the following compounds (5-1) to (5-4). Among them, the compound (5-2) wherein k is 2 is preferred from the viewpoint that a non-aqueous electrolyte solution of the present invention having a high conductivity may easily be obtained.

In the case of using the compound (5), the content of the compound (5-2) in the total amount of the compound (5) is preferably from 50 mass%, and it is more preferred that the total amount of the compound (5) is the compound (5-2).

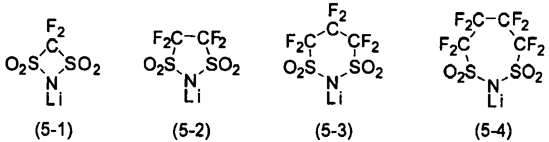

The amount of the lithium salt (I) in the non-aqueous electrolyte solution is not particularly limited and is preferably from 0.1 to 3.0 mol/L, particularly preferably from 0.5 to 2.0 mol/L. When the amount of the lithium salt (I) is at least the lower limit value in the above range, a non-aqueous electrolyte solution having a high conductivity may easily be obtained. Further, when the amount of the lithium salt (I) is at most the upper limit value in the above range, the lithium salt may easily be dissolved in the solvent (II) for dissolving the electrolyte salt, containing the after-described compounds (II-1) to (II-3) and, as the case requires, the compound (II-4).

Further, when both LiPF₆ and the compound (5) are used, the molar ratio (Mb/Ma) of the molar amount (Mb) of the compound (5) to the molar amount (Ma) of LiPF₆ is not particularly limited but is preferably from 0.01 to 10, more preferably from 0.05 to 2.0.

When the molar ratio (Mb/Ma) is at least the lower limit value in the above range, a high conductivity of the flame-retardant non-aqueous electrolyte solution may easily be maintained. Further, when the molar ratio (Mb/Ma) is at most the upper limit value in the above range, a highly chemically-stable non-aqueous electrolyte solution may easily be obtained.

Further, when both LiPF₆ and LiBF₄ are used, the molar ratio (Mc/Ma) of the molar amount (Mc) of LiBF₄ to the molar amount (Ma) of LiPF₆ is not particularly limited but is preferably from 0.01 to 10, more preferably from 0.05 to 2.0.

When the molar ratio (Mc/Ma) is at least the lower limit value in the above range, a high conductivity of the flame-retardant non-aqueous electrolyte solution may easily be maintained. Further, when the molar ratio (Mb/Ma) is at most the upper limit value in the above range, a highly chemically-stable non-aqueous electrolyte solution may easily be obtained.

Further, when at least one lithium salt (I-A) selected from the group consisting of LiPF₆, LiBF₄ and the compound (5), and at least one lithium salt (I-B) selected from the group consisting of (FSO₂)₂ NLi, (CF₃ SO₂)₂ NLi, (CF₃ CF₂ SO₂)₂ NLi, LiClO₄, the compound (6) and the compound (7), are used in combination, the molar ratio (Me/Md) of the total molar amount (Me) of the lithium salt (I-B) to the total molar amount (Md) of the lithium salt (I-A) is not particularly limited but is preferably from 0.01 to 10, more preferably from 0.05 to 2.0.

When the molar ratio (Me/Md) is at least the lower limit value in the above range, a high conductivity of the flame-retardant non-aqueous electrolyte solution may easily be maintained. Further, when the molar ratio (Me/Md) is at most the upper limit value in the above range, a highly chemically-stable non-aqueous electrolyte solution may easily be obtained.

### [Solvent (II)]

The solvent (II) comprises the after-described compounds (II-1) to (II-3) and, as the case requires, the compound (II-4).

### (Compounds (II-1))

The compound (II-1) is a solvent which imparts flame retardancy to the non-aqueous electrolyte solution. The compound (II-1) is at least one compound selected from the group consisting the following compound (1) and the following compound (2). One of them may be used alone, or two or more of them may be used in an optional combination and ratio.

R¹-O-R² (1)

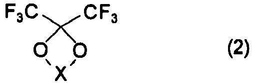

In the formula (1), each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having an etheric oxygen atom between carbon-carbon atoms, or a C₁₋₁₀ fluorinated alkyl group having an etheric oxygen atom between carbon-carbon atoms, provided that at least one of R¹ and R² is a group containing fluorine atom(s).

Further, in the formula (2), X is a C₁₋₅ alkylene group, a C₁₋₅ fluorinated alkylene group, a C₁₋₅ alkylene group having an etheric oxygen atom between carbon-carbon atoms, or a C₁₋₅ fluorinated alkylene group having an etheric oxygen atom between carbon-carbon atoms.

In this specification, "fluorinated" means that some or all of hydrogen atoms bonded to carbon atoms are substituted by fluorine atoms. A fluorinated alkyl group is a group having some or all of hydrogen atoms in an alkyl group substituted by fluorine atoms. In a partially fluorinated group, hydrogen atoms are present. The "partially fluorinated" means that some of hydrogen atoms bonded to carbon atoms are substituted by fluorine atoms.

Further, the above alkyl group may be a group having a straight chain structure, a branched structure or a partially cyclic structure (such as a cycloalkylalkyl group). The alkyl group having an etheric oxygen atom between carbon-carbon atoms may be an alkoxyalkyl group. Further, two or more etheric oxygen atoms may be present in the alkyl group having an etheric oxygen atom between carbon-carbon atoms.

One or each of R¹ and R² in the compound (1) is preferably a fluorinated alkyl group. When one or each of R¹ and R² is a fluorinated alkyl group, the solubility of the lithium salt (I) in the non-aqueous electrolyte solution is improved. R¹ and R² in the compound (1) may be the same or different.

The compound (1) is preferably a compound (1-A) wherein each of R¹ and R² is a C₁₋₁₀ fluorinated alkyl group, or a compound (I-B) wherein R¹ is a C₁₋₁₀ fluorinated alkyl group having an etheric oxygen atom between carbon-carbon atoms and R² is a C₁₋₁₀ fluorinated alkyl group.

The compound (1) is preferably a compound wherein the total number of carbon atoms is from 4 to 10, more preferably a compound wherein the total number of carbon atoms is from 4 to 8, because if the number of carbon atoms is too small, the boiling point may be too low, and if the number of carbon atoms is too large, the viscosity may become high. The molecular weight of the compound (1) is preferably from 150 to 800, more preferably from 150 to 500, particularly preferably from 200 to 500. The number of etheric oxygen atoms in the compound (1) is influential over the flammability. Accordingly, in the case of the compound (1) having etheric oxygen atoms, the number of etheric oxygen atoms is preferably from 1 to 4, more preferably 1 or 2. Further, when the fluorine content in the compound (1) becomes high, the flame retardancy will be improved. Accordingly, the proportion of the mass of fluorine atoms to the molecular weight of the compound (1) is preferably at least 50%, more preferably at least 60%.

Specific examples of the compound (1-A), the compound (1-B) and the compound (1) other than the compound (1-A) and the compound (1-B), may, for example, be compounds (compound (2-A), compound (2-B), etc.) disclosed in e.g. WO2009/133899.

The compound (1) is preferably the compound (1-A) in that the lithium salt (I) can easily be uniformly dissolved, and a non-aqueous electrolyte solution having a high conductivity and excellent flame retardancy can easily be obtainable. Further, the compound (1-A) is preferably CF₃CH₂OCF₂CF₂ H (tradename: AE-3000, manufactured by Asahi Glass Company, Limited.), CHF₂ CF₂ CH₂ OCF₂ CF₂ H, CF₃ CF₂ CH₂ OCF₂ CF₂ H, CF₃ CH₂ OCF₂ CHFCF₃ or CHF₂ CF₂ CH₂ OCF₂ CFHCF₃. Particularly preferred is CF₃ CH₂ OCF₂ CF₂ H or CHF₂ CF₂ CH₂ OCF₂ CFHCF₃.

In a case where the compound (1) is used as the compound (II-1) in the non-aqueous electrolyte solution of the present invention, it is preferred to use the compound (1-A) as essential. As the compound (1-A) to be used at that time, it is preferred to use, as essential, at least one member selected from the group consisting of the above CF₃ CH₂ OCF₂ CF₂ H (tradename: AE-3000, manufactured by Asahi Glass Company, Limited.), CHF₂CF₂CH₂OCF₂CF₂H, CF₃ CF₂ CH₂ OCF₂ CF₂ H, CF₃ CH₂ OCF₂ CHFCF₃ and CHF₂ CF₂ CH₂ OCF₂ CFHCF₃, and it is particularly preferred to use, as essential, at least one of CF₃ CH₂ OCF₂ CF₂ H and CHF₂ CF₂ CH₂ OCF₂ CFHCF₃.

In the case of using the compound (1), the content of the compound (1-A) in the total amount of the compound (1) is preferably at least 50 mass%, and it is more preferred that the total amount of the compound (1) is the compound (1-A).

In the compound (2), X may have a straight chain structure or a branched structure. X is preferably a C₁₋₅ alkylene group, more preferably a C₂₋₄ alkylene group. Such an alkylene group preferably has a straight chain structure or a branched structure. In a case where the alkylene group for X has a branched structure, the side chain is preferably a C₁₋₃ alkyl group, or a C₁₋₃ alkyl group having an etheric oxygen atom.

Further, the compound (2) is preferably a compound (2) wherein X is CH₂, CH₂ CH₂, CH(CH₃)CH₂ or CH₂ CH₂ CH₂, in that the lithium salt (I) can be uniformly dissolved, and a non-aqueous electrolyte solution having a high conductivity and excellent flame retardancy can easily be obtainable.

Specific examples of the compound (2) may, for example, be compounds represented by the following formulae. It is preferred to use a compound wherein X is CH₂ CH₂ or a compound wherein X is CH(CH₃)CH₂, in that the lithium salt (I) can easily be uniformly dissolved, and a non-aqueous electrolyte solution having a high conductivity and excellent flame retardancy can easily be obtainable.

In a case where the compound (2) is used as the compound (II-1) in the non-aqueous electrolyte solution of the present invention, it is preferred to use at least one of the above compound wherein X is CH₂ CH₂ (2,2-bis(trifluoromethyl)-1,3-dioxolane), and the compound wherein X is CH(CH₃)CH₂ (4-methyl-2,2-bis(trifluoromethyl)-1,3-dioxolane), as essential, and it is more preferred to use either one alone.

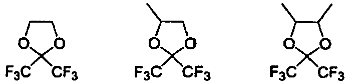

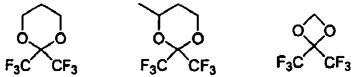

As the compound (II-1), it is possible to use the compound (1) alone, the compound (2) alone, or the compound (1) and the compound (2) in combination, and it is preferred to use the compound (1) or the compound (2) only.

Further, in a case where the compound (1) (volume: Va) and the compound (2) (volume: Vb) are used in combination as the compound (II-1), their volume ratio (Vb/Va) is preferably from 0.01 to 100, more preferably from 0.1 to 10.

The lower limit value for the content of the compound (II-1) is preferably at least 40 vol%, more preferably at least 45 vol%, further preferably at least 50 vol%, based on the total volume of the solvent (II). Further, the lower limit value is also preferably 55 vol%, more preferably 60 vol%. The upper limit value for the content of the compound (II-1) is preferably at most 90 vol%, more preferably at most 85 vol%, further preferably at most 80 vol%, based on the total volume of the solvent (II) for dissolving the electrolyte salt.

The content of the compound (II-1) is preferably from 40 to 90 vol%, more preferably from 50 to 90 vol%, further preferably from 55 to 85 vol%, particularly preferably from 60 to 80 vol%, based on the total volume of the solvent (II).

Further, the lower limit value for the content of the compound (II-1) based on the total mass (100 mass%) of the non-aqueous electrolyte solution is preferably at least 40 mass%, more preferably at least 45 mass%, further preferably at least 50 mass%. The upper limit value for the content of the compound (II-1) based on the total mass (100 mass%) of the non-aqueous electrolyte solution is preferably at most 90 mass%, more preferably at most 85 mass%, further preferably at most 80 mass%.

### (Compound (II-2A))

The compound (II-2A) is a solvent which plays a role to uniformly dissolve the lithium salt (I) in the above compound (II-1) by being efficiently solubilized with the lithium salt (I). A part or whole of the compound (II-2) is considered to form a complex with the lithium salt (I) in the electrolyte solution.

The compound (II-2A) is a compound represented by the following formula (3A).

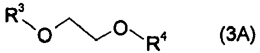

In the above formula (3A), each of R³ and R⁴ which are independent of each other, is a C₁₋₅ alkyl group, or R³ and R⁴ are linked to each other to form a C₁₋₁₀ alkylene group. More preferably, each of R³ and R⁴ which are independent of each other, is a C₁₋₃ alkyl group, or R³ and R⁴ are linked to each other to form a C₁₋₃ alkylene group.

The compound (3A) may, for example, be 1,2-dimethoxyethane (another name: monoglyme), 1-methoxy-2-ethoxyethane, 1,2-diethoxyethane or 1-methoxy-2-isopropoxyethane. Further, a compound wherein R³ and R⁴ are linked to each other to form an alkylene group, may, for example, be 1,4-dioxane. As the compound (3A), 1,2-dimethoxyethane or 1,2-diethoxyethane is preferred, and 1,2-dimethoxyethane is particularly preferred.

The compound (II-2A) may be used in combination with a compound represented by the following formula (3) other than the compound (3A) (hereinafter referred to as the compound (II-2B)). The proportion of the compound (II-2A) based on the total of the compound (II-2A) and the compound (II-2B) is preferably from 50 to 100 mass%, more preferably from 80 to 100 mass%, particularly preferably 100 mass% (i.e. the compound (II-2B) is not used in combination).

R³-O-Q¹-O-R⁴ (3)

In the above formula (3), Q¹ is a C₁₋₄ linear alkylene group or a group having at least one hydrogen atom of such a linear alkylene group substituted by a C₁₋₅ alkyl group.

Further, each of R³ and R⁴ which are independent of each other, is a C₁₋₅ alkyl group, or R³ and R⁴ are linked to each other to form a C₁₋₁₀ alkylene group. Each of R³ and R⁴ which are independent of each other, is preferably a C₁₋₃ alkyl group, and in a case where R³ and R⁴ are linked to each other to form an alkylene group, such an alkylene group is preferably a C₁₋₃ alkylene group.

Q¹ is preferably a C₁₋₄ linear alkylene group.

Each of R³ and R⁴ is preferably a methyl group or an ethyl group, more preferably a methyl group. The compound (II-2B) may, for example, be a polyethylene glycol alkyl ether such as diglyme or triglyme, or 1,3-dimethoxypropane

Hereinafter, the compound (II-2A) and the compound (II-2B) may generally be referred to as the compound (II-2). As mentioned above, the compound (II-2) is particularly preferably the compound (II-2A) alone.

The ratio (Nₒ/N_{Li}) of the total number of moles (Nₒ) of etheric oxygen atoms derived from the compound (II-2A) to the total number of moles (N_{Li}) of lithium atoms derived from the lithium salt (I) contained in the non-aqueous electrolyte solution of the present invention, is more than 1 and at most 6. The ratio (Nₒ/N_{Li}) is preferably at least 1.2, more preferably at least 1.5, further preferably at least 2. When the above ratio (Nₒ/N_{Li}) is at least the lower limit value, it becomes easy to dissolve the lithium salt (I) in the compound (II-1). On the other hand, when the above ratio (Nₒ/N_{Li}) is preferably at most 5, more preferably at most 4, further preferably at most 3.8. When the above ratio (Nₒ/N_{Li}) is at most the upper limit value in the above range, a decrease of the battery capacity due to charge and discharge at a high rate can easily be suppressed, and cycle properties under a high voltage can be improved.

The reason for the above effects is not clearly understood, but is considered to be as follows.

When the molar ratio (Nₒ/N_{Li}) is at most 4, all oxygen present in the molecule of the compound (II-2) can be coordinated to lithium ions, whereby oxidation resistance is considered to be improved. Further, in a case where the molar ratio (Nₒ/N_{Li}) is from 5 to 6, among all oxygen in the molecule of the compound (II-2), excess oxygen not coordinated to lithium ions is considered to be present in a secondary solvation zone of lithium ions thereby to contribute to an improvement of the oxidation resistance. However, if the molar ratio (Nₒ/N_{Li}) exceeds 6, among oxygen in the molecule of the compound (II-2) excess oxygen not coordinated to lithium ions and not present in the secondary solvation zone, has low oxidation resistance, whereby it is considered that the oxidation reaction proceeds in a cycle test under a high voltage, and the capacity will be deteriorated.

The content of the compound (II-2) is preferably from 0.5 to 3.0 times by mol, more preferably from 0.5 to 2.5 times by mol, further preferably from 1.0 to 2.5 times, particularly preferably from 1.0 to 2.0 times by mol, to the total amount of the lithium salt (I) in the non-aqueous electrolyte solution. When the molar ratio of the compound (II-2) to the lithium salt (I) is at least the lower limit value in the above range, the lithium salt (I) can easily be uniformly dissolved in the compound (II-1). Further, when the molar ratio of the compound (II-2) to the lithium salt (I) is at most the upper limit value in the above range, a non-aqueous electrolyte solution excellent in flame retardancy can easily be obtainable.

The lower limit value for the content of the compound (II-2) is preferably at least 5 vol%, more preferably at least 7 vol%, further preferably at least 10 vol%, particularly preferably at least 13 vol%, most preferably at least 15%, based on the total volume of the solvent (II). The upper limit value for the content of the compound (II-3) is preferably at most 30 vol%, more preferably at most 25 vol%, further preferably at most 22 vol%, based on the total volume of the solvent (II).

The content of the compound (II-2) is preferably from 5 to 30 vol%, more preferably from 10 to 30 vol%, further preferably from 10 to 25 vol%, particularly preferably from 10 to 22 vol%, most preferably from 15 to 22 vol%, based on the total volume of the solvent (II).

Further, the lower limit value for the content of the compound (II-2) based on the total mass (100 mass%) of the non-aqueous electrolyte solution is preferably 3 mass%, more preferably 5 mass%, further preferably 7 mass%, particularly preferably 10 mass%. The upper limit value for the content of the compound (II-2) based on the total mass (100 mass%) of the non-aqueous electrolyte solution is preferably 25 mass%, more preferably 20 mass%, further preferably 17 mass%, particularly preferably 15 mass%.

### (Compound (II-3))

The compound (II-3) is a cyclic carbonate compound having no carbon-carbon unsaturated bond. Such a cyclic carbonate compound is a compound having a ring made of carbon atoms and oxygen atoms, and said ring has a bond represented by - O-C(=O)-O-. The compound (II-3) is a compound which contains no carbon-carbon unsaturated bond in its molecule, among cyclic carbonate compounds. Here, in this specification, a carbonate compound is a compound containing a bond represented by -O-C(=O)-O- (hereinafter referred to also as a "carbonate bond"). A cyclic carbonate compound is a compound having a ring containing a carbonate bond. A carbon-carbon unsaturated bond is a carbon-carbon double bond or a carbon-carbon triple bond.

The compound (II-3) has a high polarity and plays a role of suppressing a decrease of the battery capacity due to charge and discharge at a high rate. Further, by improving the degree of dissociation of the lithium salt (I), it is possible to improve the conductivity of the non-aqueous electrolyte solution. Further, by efficiently solvating the lithium salts (I), it is possible to assist uniform dissolution of the lithium salt (I) in the compound (II-1).

The ring in the compound (II-3) is preferably a 4- to 10-membered ring, more preferably a 4- to 7-membered ring, further preferably a 5- or 6-membered ring from the viewpoint of availability, particularly preferably a 5-membered ring.

The ring of the compound (II-3) is preferably a ring having one carbonate bond, more preferably a ring wherein a carbonate bond is linked with a linear alkylene group. The number of carbon atoms in the linear alkylene group is preferably from 1 to 7, more preferably from 1 to 4, further preferably 2 or 3, particularly preferably 2. Further, such a linear alkylene group may have a substituent. The substituent may, for example, be a halogen atom, an alkyl group or a halogenated alkyl group. The halogen in the halogen atom or the halogenated alkyl group is preferably a chlorine atom or a fluorine atom.

The compound (II-3) is preferably the following compound (4):

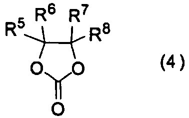

In the above formula, each of R⁵ to R⁸ which are independent of one another, is a hydrogen atom, a halogen atom, an alkyl group or a halogenated alkyl group. When at least one of R⁵ to R⁸ in the compound (4) is a halogen atom, oxidation will be retarded, such being more suitable for use under high voltage conditions.

Specific examples of the compound (4) include propylene carbonate (another name: 4-methyl-1,3-dioxolan-2-one), ethylene carbonate (another name:1,3-dioxolan-2-one), butylene carbonate (another name:4-ethyl-1,3-dioxolan-2-one), 4-chloro-1,3-dioxolan-2-one, 4-fluoro-1,3-dioxolan-2-one and 4-trifluoromethyl-1,3-dioxolan-2-one.

As the compound (II-3), a cyclic carbonate compound selected from propylene carbonate, ethylene carbonate and butylene carbonate, and a compound having at least one hydrogen atom bonded to carbon atoms constituting a ring of such a cyclic carbonate compound substituted by a halogen atom, an alkyl group or a halogenated alkyl group, are preferred. From the viewpoint of easy availability and the nature of the electrolyte solution, ethylene carbonate, propylene carbonate or 4-fluoro-1,3-dioxolan-2-one (hereinafter referred to also as fluoroethylene carbonate) is preferred.

As the compound (II-3), one type of the compound may be used alone, or two or more types of the compound may be used in combination.

The lower limit value of the content of the compound (II-3) based on the total volume of the solvent (II) is preferably at least 5 vol%, more preferably at least 7 vol%, further preferably at least 10 vol%, particularly preferably at least 13 vol%. When the content of the compound (II-3) is at least the lower limit value, a decrease of battery capacity due to charge and discharge at a high rate can easily be prevented. Further, the degree of dissociation of the lithium salt (I) will be improved, and the conductivity will be better.

The content of the compound (II-3) is preferably from 5 to 60 vol%, more preferably from 5 to 50 vol%, further preferably from 10 to 40 vol%, based on the total volume of the solvent (II).

Further, the content of the compound (II-3) is more preferably further smaller than the upper limit value in the above range. That is, the upper limit value of the content of the compound (II-3) based on the total volume of the solvent (II) is preferably at most 40 vol%, more preferably at most 35 vol%, further preferably at most 30 vol%, particularly preferably at most 27 vol%. When the content of the compound (II-3) in the non-aqueous electrolyte solution is at most the upper limit value, a non-aqueous electrolyte solution excellent in flame retardancy can easily be obtainable.

Further, the lower limit value of the content of the compound (II-3) based on the total mass (100 mass%) of the non-aqueous electrolyte solution is preferably 5 mass%, more preferably 7 mass%, further preferably 10 mass%, particularly preferably 13 mass%. The upper limit value for the content of the compound (II-3) based on the total mass (100 mass%) of the non-aqueous electrolyte solution is preferably 40 mass%, more preferably 35 mass%, further preferably 30 mass%, particularly preferably 27 mass%.

The lower limit value of the ratio (N_{II-3}/N_{Li}) of the total number of mols (N_{II-3}) of the compound (II-3) to the total number of mols (N_{Li}) of lithium atoms derived from the lithium salt (I) contained in the non-aqueous electrolyte solution of the present invention, is preferably 0.01. This lower limit value is further preferably 0.1, more preferably 0.3, further preferably 0.5, particularly preferably 1.0. When the ratio (N_{II-3}/N_{Li}) is at least this lower limit value, a decrease of battery capacity due to charge and discharge at a high rate can easily be prevented. The upper limit value of (N_{II-3}/N_{Li}) is preferably 6. This upper limit value is further preferably 5, more preferably 4.0, further preferably 3.5, particularly preferably 3.0. When (N_{II- 3}/N_{Li}) is at most this upper limit value, the flame retardancy of the electrolyte solution can easily be maintained.

Such (N_{II-3}/N_{Li}) is preferably from 0.01 to 6, more preferably from 0.1 to 5, particularly preferably from 1 to 4.

The lower limit value of {(Nₒ +N_{II-3})/N_{Li}} of the sum of the total number of mols (Nₒ) of etheric oxygen atoms derived from the compound (II-2) and the total number of mols (N_{II-3}) of the compound (II-3), to the total number of mols (N_{Li}) of the lithium atoms derived from the lithium salt (I), contained in the non-aqueous electrolyte solution of the present invention, is preferably 2.0, more preferably 2.5, further preferably 3.0. When {(Nₒ+N_{II-3})/N_{Li}} is at least the lower limit value, the solubility of the lithium salt becomes high, and a decrease of battery capacity due to charge and discharge at a high rate can easily be prevented.

Further, the upper limit value of {(Nₒ +N_{II-3})/N_{Li}} is preferably 6, more preferably 5.5, further preferably 5.0, particularly preferably 4.5. When {(Nₒ +N_{II-3})/N_{Li}} is at most the upper limit value, the flame retardancy of the electrolyte solution can easily be maintained, and cycle properties under high voltage conditions can easily be improved.

The value of {(Nₒ +N_{II})/N_{Li}} is preferably from 2.0 to 6, more preferably from 2.5 to 5.5, further preferably from 3.0 to 5.0, particularly preferably from 3.0 to 4.5.

The reason as to why a decrease of battery capacity due to charge and discharge at a high rate can be suppressed by the compound (II-3), is not necessarily clearly understood, but is considered to be as follows.

In charge and discharge of a secondary battery, lithium ions are required to be discoordinated and react with the electrode active material of an electrode, but when the compound (II-3) having a high polarity is used as a solvent to assist the solubility for the electrolyte solution, the polarity of the entire solvent will be improved, whereby the discoordination energy will be decreased, and the compound (II-2) will be readily discoordinated to let lithium ions react efficiently with the electrode active material, thereby to suppress a decrease of battery capacity due to charge and discharge at a high rate.

### (Compound (II-4))

From the viewpoint of cycle properties, the solvent (II) in the present invention may contain, in addition to the above-described compounds (II-1) to (II-3), a cyclic carbonate compound containing a carbon-carbon unsaturated bond in its molecule, or a chain-structured carbonate compound. Hereinafter, the cyclic carbonate compound containing a carbon-carbon unsaturated bond will be referred to as the compound (II-4A), and the chain-structured carbonate compound will be referred to as the compound (II-4B). Further, the compound (II-4A) and the compound (II-4B) will be generally referred to as the compound (II-4).

Further, the solvent (II) does not require the compound (II-4), and it is preferred that the solvent (II) does not substantially contain the compound (II-4) (i.e. less than 0.01 vol%, based on the total volume of the solvent (II)). Further, even in a case where the solvent (II) contains the compound (II-4), the amount (vol%) of the compound (II-4) in the solvent (II) is preferably smaller than the amount of the compound (II-3).

The ring in the compound (II-4A) is preferably a 4- to 10-membered ring, more preferably a 4- to 7-membered ring, and from the viewpoint of easy availability, further preferably a 5- or 6-membered ring, particularly preferably a 5-membered ring.

The ring in the compound (II-4A) is preferably a ring having one carbonate bond.

The carbon-carbon unsaturated bond in the compound (II-4A) may be present in the ring or outside of the ring. The number of carbon-carbon unsaturated bonds in one molecule is preferably from 1 to 5, more preferably from 1 to 3, and from the viewpoint of easy availability and the durability of the non-aqueous electrolyte solution, further preferably from 1 to 2, particularly preferably 1.

The compound (II-4A) is preferably the following compound (8-1) or (8-2).

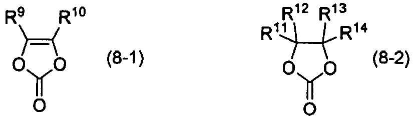

In the above formula, each of R⁹ and R¹⁰ which are independent of each other, is a hydrogen atom, a halogen atom, a C₁₋₃ alkyl group or a C₁₋₃ halogenated alkyl group.

Each of R¹¹ to R¹⁴ which are independent of one another, is a hydrogen atom, a C₁₋₃ alkyl group, a vinyl group or an allyl group, provided that at least one of R¹¹ to R¹⁴ is a vinyl group or an allyl group.

Specific examples of the compound (8-1) may be vinylene carbonate (another name:1,3-dioxol-2-one) and dimethyl vinylene carbonate (another name:4,5-dimethyl-1,3-dioxol-2-one), and a specific example of the compound (8-2) may be 4-vinyl-1,3-dioxolan-2-one. As the compound (II-4), vinylene carbonate is preferred.

As the compound (II-4A), it is possible to use the compound (8-1) only, the compound (8-2) only, or the compound (8-1) and the compound (8-2) in combination.

The compound (II-4B) is a chain-structured carbonate compound, and a compound (9) represented by the following formula (9) is preferred.

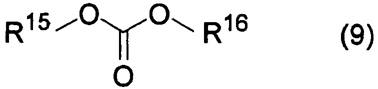

In the above formula, each of R¹⁵ and R¹⁶ which are independent of each other, is a C₁₋₃ alkyl group or a C₁₋₃ halogenated alkyl group.

The compound (9) may, for example, be dimethyl carbonate, diethyl carbonate, ethylmethyl carbonate, methylpropyl carbonate. As the compound (II-4B), diethyl carbonate or ethylmethyl carbonate is preferred.

When charging is carried out with a secondary battery using a non-aqueous electrolyte solution containing the compound (II-4), the compound (II-4) will be decomposed and form a stable coating film on the surface of the negative electrode (such as a carbon electrode). The coating film formed by the compound (II-4) is capable of reducing a resistance at the electrode interface and thus brings about an effect to facilitate intercalation of lithium ions into the negative electrode. That is, the impedance at the negative electrode interface is reduced by the coating film formed by the compound (II-4) in the non-aqueous electrolyte solution, whereby intercalation of lithium ions into the negative electrode is facilitated. Further, the compound (II-4) has a high polarity like the compound (II-3), and it thus facilitates intercalation of lithium ions into the negative electrode and improves the cycle properties, without inhibiting the effects by the compound (II-3).

In a case where the compound (II-4A) is to be used as the compound (II-4), with a view to providing flame retardancy over a long period of time, suppression of phase separation and formation of a large amount of carbon dioxide gas in the non-aqueous electrolyte solution, suppression of a decrease in the low temperature properties and providing an effect to improve the solubility of the lithium salt (I) at the same time, the content of the compound (II-4A) is preferably from 0.01 to 10 vol%, more preferably from 0.05 to 5.0 vol%, particularly preferably from 0.1 to 3.0 vol%, based on the total volume of the solvent (II).

In a case where the compound (II-4B) is to be used as the compound (II-4), the proportion of the compound (II-4B) based on the total volume of the solvent (II) may be larger than in the above-mentioned case of the compound (II-4A). However, the compound (II-4B) has a lower ignition point than the compound (II-3) or the compound (II-4A), and therefore, if the proportion of the compound (II-4B) in the solvent (II) is too high, deterioration of the flame retardancy is likely to be brought about without improving the charge and discharge properties at a high rate. Therefore, in the case of using the compound (II-4B), the content of the compound (II-4B) is preferably less than 20 vol%, more preferably less than 15 vol%, based on the total volume of the solvent (II).

Further, in the case of using the compound (II-4), the total content of the compounds (II-3) and (II-4) is preferably at most 40 vol%, more preferably at most 35 vol%, based on the total volume of the solvent (II). Especially when the compound (II-4B) is used in a relatively high proportion, the upper limit of such a proportion is preferably controlled by the above proportion as the total with the compound (II-3).

Further, in the non-aqueous electrolyte solution of the present invention, the upper limit value of the content of the compound (II-4) is preferably 30 mass%, more preferably 25 mass%, further preferably 20 mass%, particularly preferably 15 mass%. The lower limit value of the content of the compound (II-4) is 0%.

### (Preferred combinations of lithium salt (I) and solvent (II))

As the non-aqueous electrolyte solution of the present invention, it is particularly preferred to use the following combination of the lithium salt (I) and the solvent (II), since the desired effects of the present invention may thereby be increased.

The lithium salt (I) is at least one member selected from the group consisting of LiPF₆, the above compound (5), (FSO₂)₂ NLi, (CF₃ SO₂)₂ NLi, (CF₃ CF₂ SO₂)₂ NLi, LiClO₄, the above compound (6), the above compound (7) and LiBF₄, and the solvent (II) comprises at least one member selected from the group consisting of the compound (1) and the compound (2), as the compound (II-1), the compound (II-2A), and the compound (4) as the compound (II-3).

Or, the lithium salt (I) is at least one member selected from the group consisting of LiPF₆, the above compound (5), (FSO₂)₂ NLi, (CF₃ SO₂)₂ NLi, (CF₃ CF₂ SO₂)₂ NLi, LiClO₄, the above compound (6), the above compound (7) and LiBF₄, and the solvent (II) comprises at least one member selected from the group consisting of the compound (1) and the compound (2), as the compound (II-1), the (II-2A), the compound (4) as the compound (II-3), and the compound (II-4) in an amount of from 0.01 to 10 vol% based on the total volume of the solvent (II), provided that the proportion (vol%) of the compound (II-4) is smaller than the compound (II-3), and the total amount of the compounds (II-3) and (II-4) is at most 40 vol%.

More preferably, the lithium salt (I) is at least one member selected from the group consisting of LiPF₆, (CF₃ SO₂)₂ NLi, (CF₃ CF₂ SO₂)₂ NLi, LiClO₄ and LiBF₄, and the solvent (II) comprises at least one member selected from the group consisting of CF₃ CH₂ OCF₂ CF₂ H, CHF₂ CF₂ CH₂ OCF₂ CF₂ H, CF₃ CF₂ CH₂ OCF₂ CF₂ H, CF₃ CH₂ OCF₂ CHFCF₃, CHF₂ CF₂ CH₂ OCF₂ CFHCF₃, a compound of the formula (2) wherein X is CH₂ CH₂ and a compound of the formula (2) wherein X is CH(CH₃)CH₂, as the compound (II-1), as the compound (II-2A), ethylene carbonate or propylene carbonate as the compound (II-3), and the compound (9) as the compound (II-4B) in an amount of from 0.01 to 15 vol%, based on the total volume of the solvent (II), provided that the proportion (vol%) of the compound (II-4B) is smaller than the compound (II-3), and the total amount of the compounds (II-3) and (II-4B) is at most 35 vol%.

Further preferably, the lithium salt (I) is LiPF₆, and the solvent (II) comprises:
CHF₂ CF₂ CH₂ OCF CFHCF₃ (HFE5510), CF₃ CH₂ OCF₂ CF₂ H (AE-3000), CF₃ CH₂ OCF₂ CHFCF₃ (HFE449mec-f) or 2,2-bis(trifluoromethyl)-1,3-dioxolane (SX-1), as the compound (II-1),
1,2-dimethoxyethane or 1,2-diethoxyethane, as the compound (II-2A),
ethylene carbonate, propylene carbonate or fluoroethylene carbonate, as the compound (II-3), and
substantially no compound (II-4), or diethyl carbonate or ethylmethyl carbonate as the compound (II-4B) in an amount of from 0.01 to 15 vol% based on the solvent (II), provided that the proportion (vol%) of such a dialkyl carbonate is smaller than the proportion of the compound (II-3), and its total amount with the compound (II-3) is at most 35 vol%.

Particularly preferably, the lithium salt (I) is LiPF₆, and the solvent (II) comprises:
CHF₂ CF₂ CH₂ OCF₂ CFHCF₃, as the compound (II-1),
1,2-dimethoxyethane, as the compound (II-2A),
ethylene carbonate or propylene carbonate, as the compound (II-3), and
substantially no the compound (II-4).

### (Other solvents)

The solvent (II) in the present invention may contain solvents made of compounds other than the above-mentioned compounds (II-1), (II-2), (II-3) and (II-4) (hereinafter referred to as "other solvents") within such a range that the non-aqueous electrolyte solution will not undergo phase separation and the effects of the present invention will not be inhibited.

Such other solvents include, for example, a fluorinated alkane; a carboxylic acid ester such as a propionic acid alkyl ester, a malonic acid dialkyl ester or an acetic acid alkyl ester; a cyclic ester such as γ-butylolacton; a cyclic sulfonic acid ester such as propane sultone; a sulfonic acid alkyl ester; and a carbonitrile such as acetonitrile, isobutylonitrile or pivalonitrile. The content of other solvents other than the fluorinated alkane is preferably more than 0 and at most 20 vol%, more preferably more than 0 and at most 10 vol%, particularly preferably more than 0 and at most 5 vol%, based on the total volume of the solvent (II).

In a case where the non-aqueous electrolyte solution of the present invention contains a fluorinated alkane as other solvent, it is possible to suppress the vapor pressure of the non-aqueous electrolyte solution and to further improve flame retardancy of the non-aqueous electrolyte solution. The fluorinated alkane is meant for a compound having at least one hydrogen atom in an alkane substituted by a fluorine atom, wherein hydrogen atoms still remain. In the present invention, C₄₋₁₂ fluorinated alkanes are preferred. In a case where a fluorinated alkane having at least 6 carbon atoms is used among them, an effect to lower the vapor pressure of the non-aqueous electrolyte solution can be expected, and when the number of carbon atoms is at most 12, the solubility of the lithium salt (I) can easily be maintained. Further, the fluorine content in the fluorinated alkane (the fluorine content means the proportion of the mass of fluorine atoms in the molecular weight) is preferably from 50 to 80%. When the fluorine content in the fluorinated alkane is at least 50%, the flame retardancy becomes higher. When the fluorine content in the fluorinated alkane is at most 80%, the solubility of the lithium salt (I) can easily be maintained.

The fluorinated alkane is preferably a compound having a straight chain structure, and it may, for example, be n-C₄ F₉ CH₂ CH₃, n-C₆ F₁₃ CH₂ CH₃, n-C₆ F₁₃ H or n-C₈ F₁₇ H. One of these fluorinated alkanes may be used alone, or two or more of them may be used in combination.

In a case where the above fluorinated alkane is incorporated to the non-aqueous electrolyte solution of the present invention, the content of such a fluorinated alkane is preferably from 5 to 20 vol%, based on the total volume of the solvent (II). When the content of the fluorinated alkane is at least 5 vol%, the vapor pressure can easily be lowered, and flame retardancy can easily be obtainable. When the content of the fluorinated alkane is at most 20 vol%, the solubility of the lithium salt (I) can easily be maintained.

### (Other components)

To the non-aqueous electrolyte solution of the present invention, other components may be incorporated, as the case requires, in order to improve the functions of the non-aqueous electrolyte solution. Such other components may, for example, be a conventional overcharge-preventing agent, a dehydrating agent, a deoxidizing agent, or a property-improving adjuvant to improve cycle properties or capacity-maintaining properties after storage at a high temperature.

The overcharge-preventing agent may, for example, be an aromatic compound such as biphenyl, an alkylbiphenyl, terphenyl, partially hydrogenated terphenyl, cyclohexylbenzene, t-butylbenzene, t-amylbenzene, diphenyl ether or dibenzofuran; a partially fluorinated product of the above aromatic compound, such as 2-fluorobiphenyl, o-cyclohexylfluorobenzene or p-cyclohexylfluorobenzene; or a fluorinated anisole compound such as 2,4-difluoroanisole, 2,5-difluoroanisole or 2,6-difluoroanisole. Such overcharge-preventing agents may be used alone or in combination as a mixture of two or more of them.

In a case where the non-aqueous electrolyte solution contains an overcharge-preventing agent, the content of the overcharge-preventing agent in the non-aqueous electrolyte solution is preferably from 0.01 to 5 mass%. By incorporating at least 0.01 mass% of the overcharge-preventing agent in the non-aqueous electrolyte solution, it becomes easier to prevent breakage or ignition of a secondary battery by overcharge, and it is possible to use the secondary battery more stably.

The dehydrating agent may, for example, be molecular sieves, salt cake, magnesium sulfate, calcium hydrate, sodium hydrate, potassium hydrate or lithium aluminum hydrate. As the solvent to be used for the non-aqueous electrolyte solution of the present invention, it is preferred to use one subjected to dehydration by the above dehydrating agent, followed by rectification. Otherwise, a solvent subjected to dehydration by the above dehydrating agent without rectification may be used.

The property-improvement adjuvant to improve the cycle properties or the capacity-maintaining properties after storage at a high temperature, may, for example, be a carbonate compound such as phenylethylene carbonate, erythritan carbonate or spiro-bis-dimethylene carbonate; a carboxylic acid anhydride such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride or phenylsuccinic anhydride; a sulfur-containing compound such as busulfan, sulfolane, sulfolene, dimethylsulfone, diphenylsulfone, methylphenylsulfone, dibutyldisulfide, dicyclohexyldisulfide, tetramethylthiuram monosulfide, N,N-dimethylmethane sulfonamide or N,N-diethylmethane sulfonamide; a nitrogen-containing compound such as 1-methyl-2-pyrrolidinone, 1-methyl-2-piperidone, 3-methyl-2-oxazolidinone, 1,3-dimethyl-2-imidazolidinone or N-methylsuccinimide; or a hydrocarbon compound such as heptane, octane or cycloheptane. These property-improving adjuvants may be used alone or in combination as a mixture of two or more of them.

In a case where the non-aqueous electrolyte solution contains a property-improving adjuvant, the content of the property-improving adjuvant in the non-aqueous electrolyte solution is preferably from 0.01 to 5 mass%.

The non-aqueous electrolyte solution of the present invention is useful for a secondary battery. Especially in a case where it is used as the electrolyte solution for a lithium ion secondary battery, it lets the lithium salt (I) be dissolved excellently, a long-term flame retardancy can be obtained, and excellent charge/discharge properties at a high rate and excellent cycle properties can be obtained. Further, it may be used for secondary batteries other than a lithium ion secondary battery. As such other secondary batteries, an electric double layer capacitor, a lithium ion capacitor, etc. may, for example, be mentioned.

As mentioned above, secondary batteries using conventional non-aqueous electrolyte solutions as disclosed in Patent Documents 6 and 7, sometimes undergo deterioration of the high rate charge/discharge properties and the cycle properties under high voltage conditions. The deterioration of these properties has been studied, and it has been found that in the secondary battery using the non-aqueous electrolyte solution of Patent Document 6, as a glyme type solvent, a glyme type solvent other than a monoglyme is used as the main component, which is a factor for the deterioration of the high rate charge/discharge properties and the cycle properties. Further, in the secondary battery using the non-aqueous electrolyte solution of Patent Document 7, the content of a non-fluorinated ether is large, which has been found to be a factor for the deterioration.

In contrast with the above-mentioned conventional non-aqueous electrolyte solutions, the non-aqueous electrolyte solution of the present invention is such that the solvent (II) for dissolving the electrolyte salt contains the compound (II-2A), and the ratio (Nₒ/N_{Li}) is from 1 to 6, whereby it has excellent cycle properties particularly under high voltage conditions. Although the reason for improvement is not clearly understood, but it is considered attributable to an improvement of the oxidation resistance as many oxygen atoms in the molecule of the compound (II-2A) are coordinated to lithium ions. Further, the non-aqueous electrolyte solution of the present invention is capable of suppressing a decrease of the battery capacity and the energy density in charge/discharge at a high rate. Further, the non-aqueous electrolyte solution of the present invention has a good solubility of the lithium salt (I), is excellent in the long-term flame retardancy and has a practically sufficient conductivity.

### <Secondary battery>

The electrolyte solution of the present invention is preferably used as an electrolyte solution for a lithium ion secondary battery. Such a secondary battery is one comprising a negative electrode and a positive electrode, and the non-aqueous electrolyte solution of the present invention.

The negative electrode may be an electrode containing a negative electrode active material capable of absorbing and desorbing lithium ions. As such a negative electrode active material, a known negative electrode active material for lithium ion secondary batteries may be used, and a carbon material such as an artificial or natural graphite or amorphous carbon, or a metal or a metal compound such as metal lithium or a lithium alloy, may, for example, be mentioned. Such negative electrode active materials may be used alone or in combination as a mixture of two or more of them.

Among them, a carbon material is preferred as the negative electrode active material. As such a carbon material, graphite or a carbon material having the surface of graphite covered with carbon amorphous as compared with the graphite, is particularly preferred.

The graphite preferably has a value d (interlayer distance, hereinafter referred to simply as a value d) of the lattice plane (002 face) being from 0.335 to 0.338 nm, more preferably from 0.335 to 0.337 nm, as obtained by X-ray diffraction by the method stipulated by Carbon Material Committee No. 117 of the Japan Society for Promotion of Scientific Research (hereinafter referred to as the method of the Japan Society for Promotion of Scientific Research). Further, the crystallite size (Lc) obtained by X-ray diffraction by the method of the Japan Society for Promotion of Scientific Research is preferably at least 30 nm, more preferably at least 50 nm, further preferably at least 100 nm. The ash content in the graphite is preferably at most 1 mass%, more preferably at most 0.5 mass%, further preferably at most 0.1 mass%.

Further, the carbon material having the surface of graphite covered with amorphous carbon is preferably such that graphite having a value d of from 0.335 to 0.338 nm is used as a nucleus, the surface of such graphite is covered with amorphous carbon having a value d larger than the graphite, and the ratio of the nucleus graphite (mass: W_{A}) to the amorphous carbon (mass: W_{B}) covering the graphite is preferably from 80/20 to 99/1 by mass ratio (W_{A}/W_{B}). By using such a carbon material, it becomes easy to produce a negative electrode having a high capacity and being scarcely reactive with the non-aqueous electrolyte solution.

The particle diameter of the carbon material is preferably at least 1 µm, more preferably at least 3 µm, further preferably at least 5 µm, particularly preferably at least 7 µm, by a median diameter by a laser diffraction scattering method. Further, the upper limit of the particle diameter of the carbon material is preferably 100 µm, more preferably 50 µm, further preferably 40 µm, particularly preferably 30 µm.

The specific surface area of the carbon material by BET method is preferably at least 0.3 m²/g, more preferably at least 0.5 m²/g, further preferably at least 0.7 m²/g, particularly preferably at least 0.8 m²/g. The upper limit of the specific surface area of the carbon material is preferably 25.0 m²/g, more preferably 20.0 m²/g, further preferably 15.0 m²/g, particular preferably 10.0 m²/g.

The carbon material preferably has a value R (=I_{B}/I_{A}) of from 0.01 to 0.7, which is represented by a ratio of the peak intensity I_{B} of peak P_{B} within a range of from 1,300 to 1,400 cm⁻¹ to the peak intensity I_{A} of peak P_{A} within a range of from 1,570 to 1,620 cm⁻¹, as analyzed by a Raman spectrum using an argon ion laser beam. Further, the half value width of the peak P_{A} is preferably at most 26 cm⁻¹, particularly preferably at most 25 cm⁻¹.

A metal which can be used as a negative electrode active material other than metal lithium may, for example, be Ag, Zn, Al, Ga, In, Si, Ti, Ge, Sn, Pb, P, Sb, Bi, Cu, Ni, Sr or Ba. Further, as a lithium alloy, an alloy of lithium with such a metal may be mentioned. Further, as a metal compound, an oxide of such a metal may, for example, be mentioned.

Among them, at least one metal selected from the group consisting of Si, Sn, Ge, Ti and Al, or a metal compound, metal oxide or lithium alloy containing such a metal, is preferred, and more preferred is at least one metal selected from the group consisting of Si, Sn and Al, or a metal compound, lithium alloy or lithium titanate containing such a metal.

A metal capable of absorbing/desorbing lithium ions, a metal compound containing such a metal, or a lithium alloy usually has a large capacity per unit mass as compared with a carbon material as represented by graphite and thus is suitable as a negative electrode active material for a secondary battery which is required to have a higher energy density.

The positive electrode may, for example, be an electrode containing a positive electrode active material which is capable of absorbing and desorbing lithium ions.

As such a positive electrode active material, a known positive electrode active material for a lithium ion secondary battery may be used, and, for example, a lithium-containing transition metal oxide, a lithium-containing transition metal composite oxide using at least one transition metal, a transition metal oxide, a transition metal sulfide, a metal oxide or an olivine type metal lithium salt may, for example, be mentioned.

The lithium-containing transition metal oxide may, for example, be lithium cobalt oxide, lithium nickel oxide or lithium manganese oxide.

As a transition metal for the lithium-containing transition metal composite oxide, V, Ti, Cr, Mn, Fe, Co, Ni or Cu is, for example, preferred. The lithium-containing transition metal composite oxide may, for example, be a lithium cobalt composite oxide such as LiCoO₂, a lithium nickel composite oxide such as LiNiO₂, a lithium manganese composite oxide such as LiMnO₂, LiMn₂O₄ or LiMnO₃, or one having a part of the transition metal atom which mainly constitutes such a lithium transition metal composite oxide substituted by another metal such as Al, Ti, V, Cr, Mn, Fe, Co, Li, Ni, Cu, Zn, Mg, Ga, Zr, Si or Yb. One having substituted by another metal may specifically be, for example, LiMn_{0.5}Ni₀.₅O₂, LiMn_{1.8}Al_{0.2}O₄, LiNi_{0.85}Co_{0.10}Al_{0.05}O₂, LiMn_{1.5}Ni_{0.5}O₄, LiNi_{1/3}Co_{1/3}Mn_{1/3}O₂ or LiMn_{1.8}Al_{0.2}O₄.

The transition metal oxide may, for example, be TiO₂, MnO₂, MoO₃, V₂O₅ or V₆O₁₃. The transition metal sulfide may, for example, be TiS₂, FeS or MoS₂. The metal oxide may, for example, be SnO₂ or SiO₂.

The olivine type metal lithium salt is a substance represented by the formula Li_{L}XₓYyO_{z}F_{g} (wherein X is Fe(II), Co(II), Mn(II), Ni(II), V(II) or Cu(II), Y is P or Si, and L, x, y, z and g are, respectively, 0≦L≦3, 1≦x≦2, 1≦y≦3, 4≦z≦12 and 0≦g≦1) or a composite thereof. For example, LiFePO₄, Li₃Fe₂(PO₄)₃, LiFeP₂O_{7,} LiMnPO₄, LiNiPO₄, LiCoPO₄, Li₂FePO₄F, Li₂MnPO₄F, Li₂NiPO₄F, Li₂CoPO₄F, Li₂FeSiO₄, Li₂MnSiO₄, Li₂NiSiO₄ or Li₂CoSiO₄ may be mentioned.

These positive electrode active materials may be used alone or in combination as a mixture of two or more of them.

Further, such a positive electrode active material having on its surface an attached substance having a composition different from the substance constituting the positive electrode active material as the main component may also be used. The surface-attached substance may, for example, be an oxide such as aluminum oxide, silicon oxide, titanium oxide, zirconium oxide, magnesium oxide, calcium oxide, boron oxide, antimony oxide or bismuth oxide; a sulfate such as lithium sulfate, sodium sulfate, potassium sulfate, magnesium sulfate, calcium sulfate or aluminum sulfate; or a carbonate such as lithium carbonate, calcium carbonate or magnesium carbonate.

With regard to the amount of the surface-attached substance, the lower limit based on the total mass of the positive electrode active material is preferably 0.1 ppm, more preferably 1 ppm, further preferably 10 ppm. The upper limit is preferably 20%, more preferably 10%, further preferably 5%. By the surface-attached substance, it is possible to suppress an oxidation reaction of the non-aqueous electrolyte solution at the surface of the positive electrode active material and thereby to improve the battery life.

The positive electrode active material is preferably a lithium-containing composite oxide having an α-NaCrO₂ structure as matrix, such as LiCoO₂, LiNiO₂ or LiMnO₂, or a lithium-containing composite oxide having a spinel structure as matrix, such as LiMn₂O₄, since its discharge voltage is high and its electrochemical stability is high.

The secondary battery of the present invention has a negative electrode and a positive electrode, and the non-aqueous electrolyte solution of the present invention, wherein either one of the negative electrode and the positive electrode is a polarizable electrode, or both of them are polarizable electrodes. The polarizable electrode is preferably one composed mainly of an electrochemically inactive material having a high specific surface area, and it is particularly preferably one made of activated carbon, carbon black, fine particles of a metal or fine particles of a conductive oxide. Among them, preferred is one having an electrode layer made of a carbon material powder having a high specific surface area such as activated carbon formed on the surface of a metal current collector.

For the preparation of an electrode, a binder to bind the negative electrode active material or the positive electrode active material is used.

As such a binder to bind the negative electrode active material or the positive electrode active material, an optional binder may be used so long as it is a material stable against the electrolyte solution and the solvent to be used at the time of preparing the electrodes. The binder may, for example, be a fluororesin such as polyvinylidene fluoride or polytetrafluoroethylene, a polyolefin such as polyethylene or polypropylene, a polymer or copolymer having unsaturated bonds such as a styrene/butadiene rubber, isoprene rubber or butadiene rubber, or an acrylic acid type polymer or copolymer such as an acrylic acid copolymer or a methacrylic acid copolymer. One of these binders may be used alone, or two or more of them may be used in combination.

In order to increase the mechanical strength and electrical conductivity, a thickener, an electrically conductive material, a filler or the like may be incorporated in the electrode.

The thickener may, for example, be carboxymethylcellulose, methylcellulose, hydroxymethylcellulose, ethylcellulose, polyvinyl alcohol, oxidized starch, phosphorylated starch, casein or polyvinylpyrrolidone. One of these thickeners may be used alone, or two or more of them may be used in combination.

The electrically conductive material may, for example, be a metal material such as copper or nickel, or a carbon material such as graphite or carbon black. One of these electrically conductive materials may be used alone, or two or more of them may be used in combination.

An electrode can be prepared by adding a binder, a thickener, an electrically conductive material, a solvent, etc. to a negative electrode active material or a positive electrode active material, to form a slurry, which is then applied to a current collector, followed by drying. In such a case, the electrode is preferably pressed and densified by pressing after the drying.

If the density of the positive electrode active material layer is too low, the capacity of the secondary battery is likely to be inadequate.

As the current collector, various types of current collector may be used. However, usually a metal or an alloy is employed. As a current collector for a negative electrode, copper, nickel, stainless steel or the like may be mentioned, and copper is preferred. Whereas, as a current collector for a positive electrode, a metal such as aluminum, titanium or tantalum, or its alloy may be mentioned, and aluminum or its alloy is preferred, and aluminum is particularly preferred.

The shape of the secondary battery may be selected depending upon the particular application, and it may be a coin-form, a cylindrical form, a square form or a laminate form. Further, the shapes of the positive electrode and the negative electrode may also be suitably selected to meet with the shape of the secondary battery.

The charging voltage of the secondary battery of the present invention is preferably at least 4.2 V, more preferably at least 4.25 V, further preferably at least 4.3 V, particularly preferably at least 4.35 V. In a case where the positive electrode active material of the secondary battery is a lithium-containing transition metal oxide, a lithium-containing transition metal composite oxide, a transition metal oxide, a transition metal sulfide or a metal oxide, the charging voltage is preferably at least 4.25 V, more preferably at least 4.3 V, particularly preferably at least 4.35 V. Further, in a case where the positive electrode active material is an olivine type metal lithium salt, the charging voltage is preferably at least 3.2 V, more preferably at least 3.4 V.

Between the positive electrode and the negative electrode of the secondary battery, a porous film is usually interposed as a separator in order to prevent short circuiting. In such a case, the non-aqueous electrolyte solution is used as impregnated to the porous film. The material and the shape of the porous film are not particularly limited so long as it is stable against the non-aqueous electrolyte solution and is excellent in the liquid-maintaining property. Preferred is a porous sheet or a non-woven fabric made of a fluororesin such as polyvinylidene fluoride, polytetrafluoroethylene or a copolymer of ethylene and tetrafluoroethylene, or a polyolefin such as polyethylene or polypropylene. The material is more preferably a polyolefin such as polyethylene or polypropylene. Further, such a porous film impregnated with the electrolyte solution and gelated may be used as a gel electrolyte.

The material for a battery exterior package to be used for the non-aqueous electrolyte solution of the present invention may also be a material which is commonly used for secondary batteries, and nickel-plated iron, stainless steel, aluminum or its alloy, nickel, titanium, a resin material, or a film material may, for example, be mentioned.

The secondary battery of the present invention as described above, employs the non-aqueous electrolyte solution of the present invention, whereby it has long-term flame retardancy and is excellent in the charge/discharge properties at a high rate and the cycle properties under high voltage conditions.

Thus, the secondary battery of the present invention may be used in various applications for, for example, mobile phones, portable game devices, digital cameras, digital video cameras, electric tools, notebook computers, portable information terminals, portable music players, electric vehicles, hybrid cars, electric trains, aircrafts, satellites, submarines, ships, uninterruptible power supply systems, robots and electric power storage systems. Further, the secondary battery of the present invention has particularly preferred characteristics when used as a large size secondary battery for e.g. electric vehicles, hybrid cars, electric trains, aircrafts, satellites, submarines, ships, uninterruptible power supply systems, robots and electric power storage systems.

### EXAMPLES

Now, the present invention will be described in detail with reference to Working Examples and Comparative Examples. However, it should be understood that the present invention is by no means restricted to the following description. Examples 1 to 3, 8 to 10, 12 to 14 and 19 are Working Examples of the present invention, and Examples 4 to 7, 11, 15 to 18 and 20 are Comparative Examples.

### <Evaluation of solubility and conductivity>

### [Example 1]

LiPF₆ (1.52 g) as a lithium salt (I), was dispersed in HFE5510 (CHF₂ CF₂ CH₂ OCF₂ CFHCF₃, 6.93 mL) as a compound (II-1), and then, monoglyme (1.80 g) as a compound (II-2) and ethylene carbonate (1.32 g) as a compound (II-3) were added and mixed to obtain a non-aqueous electrolyte solution.

### [Examples 2 to 11]

A non-aqueous electrolyte solution was obtained in the same manner as in Example 1 except that the composition of the lithium salt (I) and compounds (II-1) to (II-3) was changed as shown in Table 1.

Further, the compounds disclosed in Table 1 are as follows.

HFE5510: CHF₂ CF₂ CH₂ OCF₂ CFHCF₃

AE-3000: CF₃CH₂OCF₂CF₂H

HFE449mec-f: CF₃ CH₂ OCF₂ CHFCF₃

SX-1: 2,2-bis(trifluoromethyl)-1,3-dioxolane

monoglyme: CH₃ OCH₂ CH₂ OCH₃

diglyme: CH₃ O(CH₂ CH₂ O)₂ CH₃

### [Evaluation methods]

### (Solubility test)

In each Example, the state of dissolution of the non-aqueous electrolyte solution after expiration of 1 hour from the preparation of the non-aqueous electrolyte solution, was visually evaluated. In the evaluation of the solubility, a state such that the electrolyte solution was uniform was identified by "○ (good)", and a state such that the electrolyte solution underwent phase separation into two phases was identified by "× (no good)".

### (Flammability test)

10 mL of a non-aqueous electrolyte solution was charged into a 20 mL glass vial, and then, a gas phase portion of 5 mm above the surface of the solution was continuously exposed to a flame of a lighter, whereby the flame retardancy was evaluated on such a basis that one ignited in less than 15 seconds, was identified by "× (no good)", one ignited in from 15 seconds to less than 30 seconds, was identified by "Δ (admissible)", and one not ignited even after 30 seconds, was identified by "○ (good)".

Evaluation results of the solubility and flame retardancy are shown in Table 1.

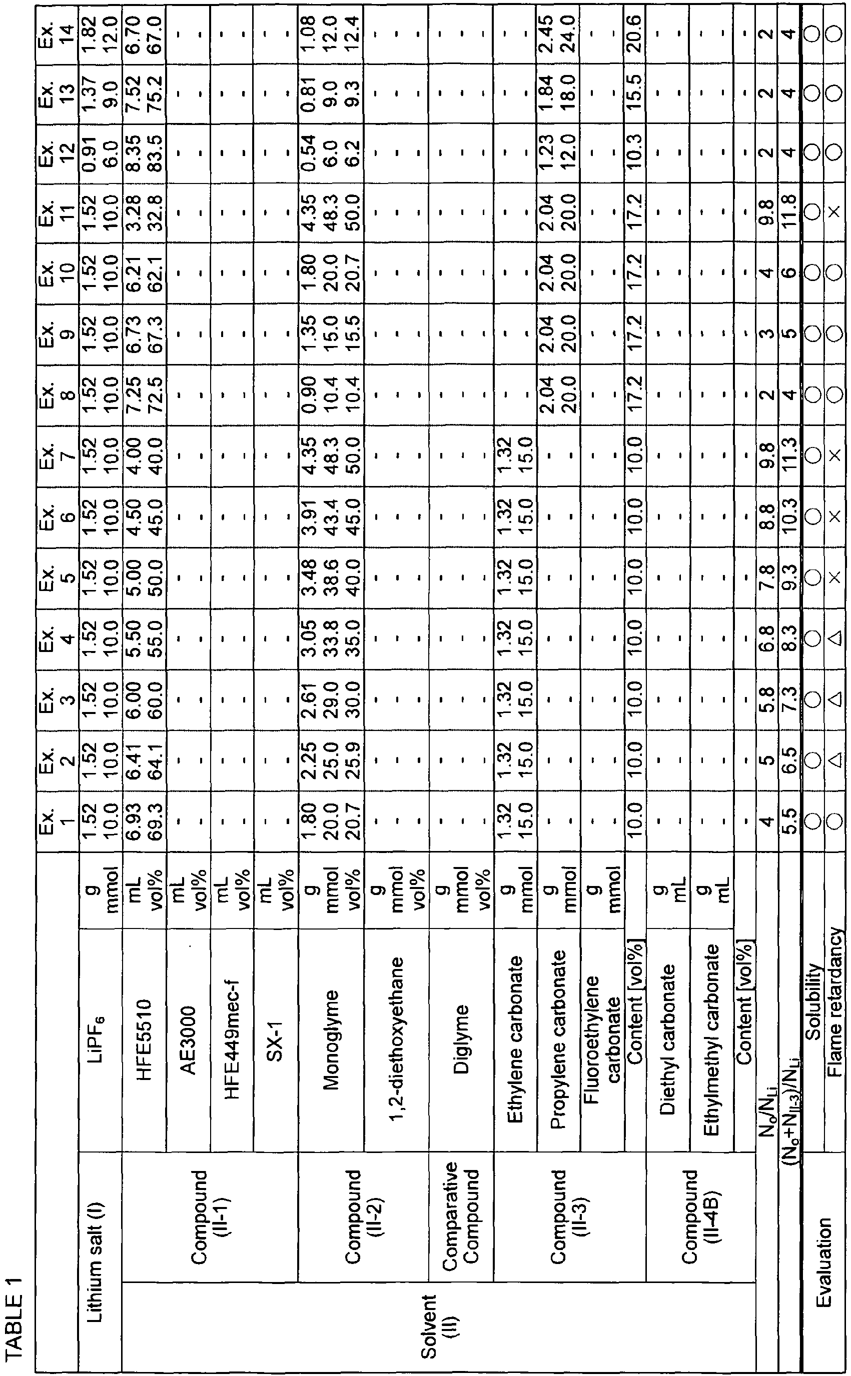

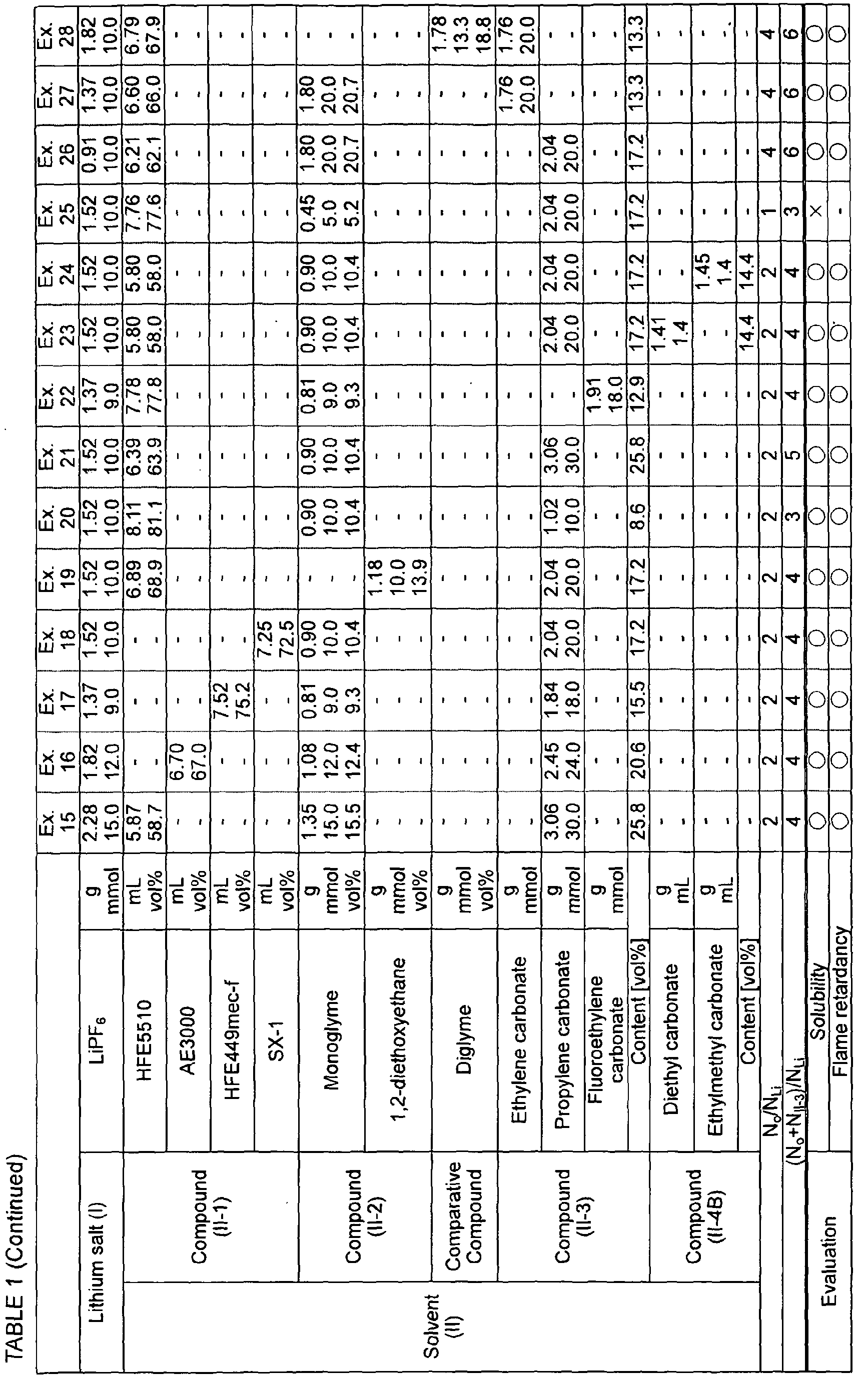

As shown in Table 1, in the non-aqueous electrolyte solutions of the present invention in Examples 1 to 3 and 8 to 10, the solubility of the lithium salt (I) was good. Further, the non-aqueous electrolyte solutions in Examples 1 to 3 and 8 to 10 had excellent flame retardancy as compared with the non-aqueous electrolyte solutions in Examples 5 to 8 and 11 wherein the molar ratio (Nₒ/N_{Li}) was larger than 6.

Further, in Example 25 wherein the ratio (Nₒ/N_{Li}) of the total number of moles (No) of the above compound (II-2) to the total number of moles (N_{Li}) of lithium atoms derived from the lithium salt (I) was 1, the solubility of the lithium salt was inadequate. Whereas, in Example 8 wherein (Nₒ/N_{Li}) was 2 and in Example 26 wherein (N_{O}/N_{Li}) was 4, the solubility of the lithium salt was high.

### [Example 29]

### <Evaluation of sheet-form non-aqueous electrolyte solution secondary battery with single-pole cell comprising LiCoO₂ positive electrode-lithium metal foil>

90 Parts by mass of LiCoO₂ (tradename: "Selion C", manufactured by AGC Seimi Chemical Co., Ltd.), 5 parts by mass of carbon black (tradename: "DENKABLACK", manufactured by Denki Kagaku Kogyo Kabushiki Kaisha) and 5 parts by mass of polyvinylidene fluoride were mixed, and N-methyl-2-pyrrolidone was added to obtain a slurry. The slurry was applied uniformly on each side of a 20-µm-thick aluminum foil, followed by drying and then by pressing so that the density of the positive electrode active material layer would be 3.0 g/cm³, thereby to obtain a LiCoO₂ positive electrode.

The LiCoO₂ positive electrode, a lithium metal foil having the same area as the LiCoO₂ positive electrode, and a separator made of polyethylene, were laminated in a 2016 type coin cell in the order of the lithium metal foil, the separator and the LiCoO₂ positive electrode, to prepare a battery element, and the non-aqueous electrolyte solution prepared in Example 1 was added, followed by sealing to prepare a coin-type non-aqueous electrolyte solution secondary battery.

### [Examples 30 and 37]

A coin-type secondary battery was prepared in the same manner as in Example 29 except that the non-aqueous electrolyte solution as shown in Table 2 was used.

### <Evaluation of cycle properties>

Evaluation of the cycle properties of the coin-type secondary battery with a single-pole cell comprising LiCoO₂ positive electrode-lithium metal foil, was carried out by the following method.

At 25°C, a cycle of charging to 4.5 V (the voltage represents a voltage based on lithium) at constant current corresponding to 0.5 C, further charging at the charging upper limit voltage until the current value became 0.02 C, and thereafter discharging to 3 V at constant current corresponding to 0.5 C, was repeated. The capacity retention ratio of the discharge capacity in the 20th cycle and the 40th cycle, to the discharge capacity at the time of discharging in the 1 st cycle was taken as the evaluation result.

Here, 1 C represents a current value for discharging a standard capacity of a battery in one hour, and 0.5 C represents a current value corresponding to 1/2 thereof. The evaluation results are shown in Table 2.

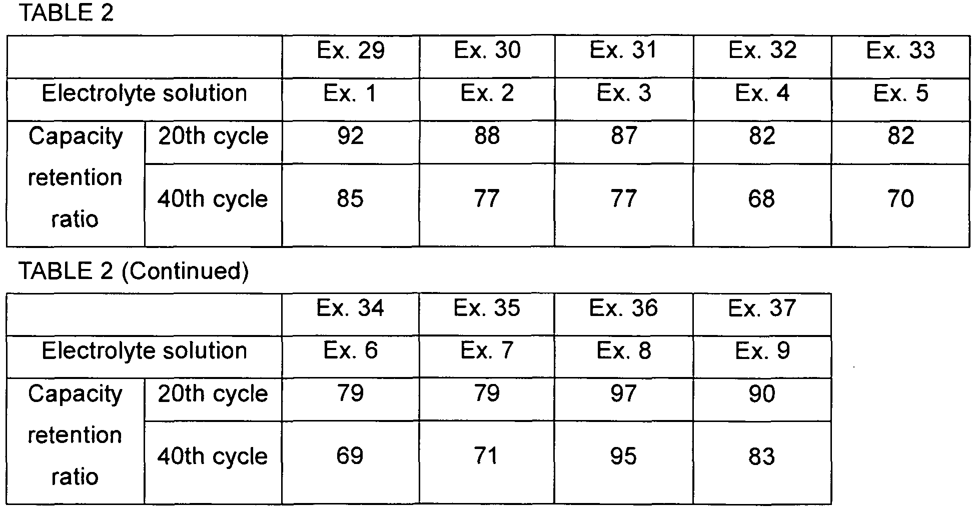

As shown in Table 2, in Examples 29 to 31 wherein the molar ratio (Nₒ/N_{Li}) is from 4 to 6, the capacity retention ratio was high, and the cycle properties were excellent as compared with Examples 32 to 35 wherein the molar ratio (N_{O}/N_{Li}) exceeded 6. Further, in Example 29 wherein the molar ratio (Nₒ/N_{Li}) was 4, the cycle properties were particularly excellent.

Further, as compared with Example 37 using an electrolyte solution wherein the ratio (Nₒ/N_{Li}) of the total number of mols (No) of the compound (II-2) to the total number of mols (N_{Li}) of lithium atoms derived from the lithium salt (I) was 4, in Example 36 using an electrolyte solution wherein the ratio (N_{O}/N_{Li}) of the total number of mols (No) of the compound (II-2) to the total number of mols (N_{Li}) of lithium atoms derived from the lithium salt (I) was 2, the capacity retention ratio was high, and the cycle properties were excellent.

### [Example 38]

In the same manner as in Example 29, two coin-type non-aqueous electrolyte solution secondary batteries (cells 1 and 2) were produced. With respect to the obtained cells 1 and 2, the energy density and the high rate charge/discharge properties were evaluated by the following method.

### [Example 39]

Two coin-type non-aqueous electrolyte solution secondary batteries (cells 3 and 4) were produced in the same manner as in Example 29 except that the non-aqueous electrolyte solution obtained in Example 7 was used. With respect to the obtained cells 3 and 4, the energy density and the high rate charge/discharge properties were evaluated by the following method.

### <Evaluation of high rate charge/discharge properties>

Evaluation of the high rate charge/discharge properties of the coin-type secondary battery with a single-pole cell comprising LiCoO₂ positive electrode-lithium metal foil, was carried out by the following method.

At 25°C, a cycle of charging to 4.5 V (the voltage represents a voltage based on lithium) at constant current corresponding to 0.5 C, further charging at the charging upper limit voltage until the current value became 0.02 C, and thereafter discharging to 3 V at constant current corresponding to 0.5 C, was repeated for 5 cycles, to stabilize the secondary battery. In the 6th cycle, charging to 4.5 V was carried out at constant current of 0.5 C, further charging at the charging upper limit voltage was carried out until the current value became 0.02 C, and thereafter, charging to 3 V was carried out at constant current of 1.0 C. In the 7th cycle, charging to 4.5 V was carried out at constant current of 0.5 C, further charging at the charging upper limit voltage was carried out until the current value became 0.02 C, and thereafter, discharging to 3 V was carried out at constant current of 2.0 C. In the 8th cycle, charging to 4.5 V was carried out at constant current of 0.5 C, further charging at the charging upper limit voltage was carried out until the current value became 0.02 C, and thereafter, charging to 3 V was carried out at constant current of 4.0 C.

The energy density retention ratio at each rate, to the energy density at the time of discharging at 0.5 C, and the capacity retention ratio of the discharge capacity at each rate, to the discharge capacity at the time of discharging at 0.5 C were taken as the evaluation results.

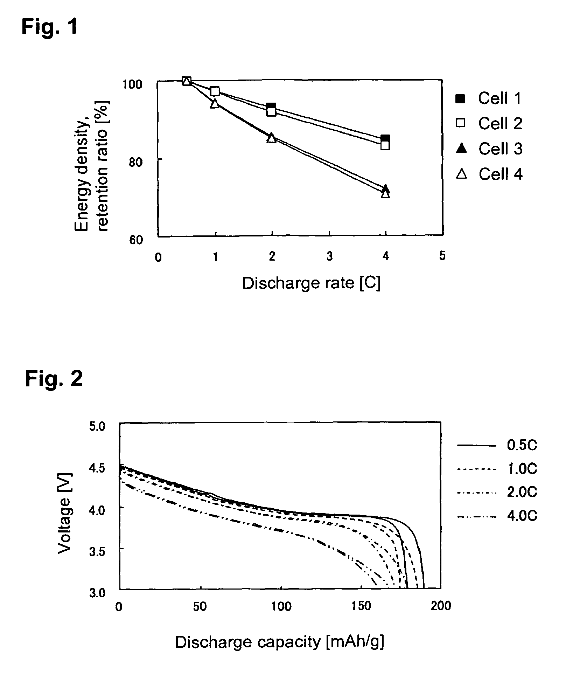

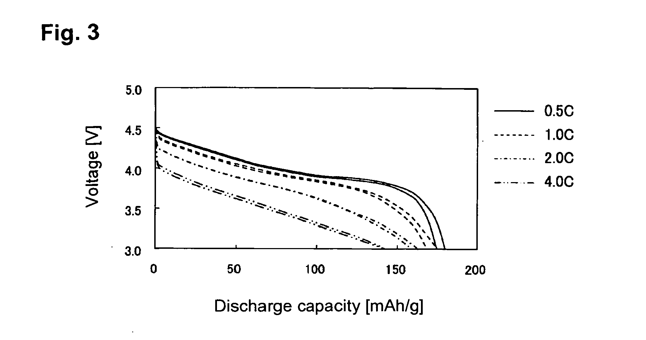

The evaluation results of the energy density are shown in Table 3 and in Fig. 1. Further, the discharge capacity/voltage curves at the time of discharging at the respective rates are shown in Figs. 2 and 3.

**TABLE 3**

| | | Ex. 38 | | | Ex. 39 | | |
|---|---|---|---|---|---|---|---|
| Electrolyte solution | | Ex. 1 | | | Ex. 7 | | |
| Evaluation | | Energy density retention ratio [%] | | | Energy density retention ratio [%] | | |
| | | Cell 1 | Cell 2 | Average | Cell 3 | Cell 4 | Average |
| Discharge rate | 0.5C | 100 | 100 | 100 | 100 | 100 | 100 |
| | 1.0C | 97 | 97 | 97 | 94 | 94 | 94 |
| | 2.0C | 93 | 92 | 92 | 85 | 85 | 85 |
| | 4.0C | 85 | 83 | 84 | 72 | 71 | 71 |

As shown in Table 3 and Fig. 1, the cells 1 and 2 in Example 38 using the non-aqueous electrolyte solution in Example 1 wherein the molar ratio (Nₒ/N_{Li}) was within a range of from 1 to 6, had high energy density retention ratios at the respective discharge rates, as compared with the cells 3 and 4 in Example 39 using the non-aqueous electrolyte solution in Example 7 wherein the molar ratio (Nₒ/N_{Li}) exceeded 6. Further, as shown in Fig. 3, with the cells in Example 39, the discharge capacity decreased more as the discharge rate was higher. Whereas, as shown in Fig. 2, with the cells in Example 38, even at a high discharge rate, the decrease of the discharge capacity was suppressed.

### <Evaluation of conductivity>

### [Example 40]

The measurement of the conductivity was carried out with respect to the non-aqueous electrolyte solution obtained in Example 27 at 25°C by a known method disclosed in "Molten Salts and High Temperature Chemistry, 2002, 45, 43".

### [Example 41]

The measurement of the conductivity was carried out in the same manner as in Example 40 except that the non-aqueous electrolyte solution obtained in Example 28 was used.

The evaluation results of the conductivity are shown in Table 4.

**TABLE 4**

| | | Ex. 40 | Ex. 41 |
|---|---|---|---|
| Electrolyte solution | | Ex. 27 | Ex. 28 |
| Conductivity | s/m | 0.53 | 0.36 |

As shown in Table 4, in Example 40 wherein monoglyme as the compound (II-2A) was used, the conductivity was higher than in Example 41 wherein diglyme as the compound (II-2B) was used which likewise had an effect to solvate a lithium salt. This may be attributable to the fact that by using monoglyme having a lower viscosity than diglyme, the viscosity of the electrolyte solution became lower.

### INDUSTRIAL APPLICABILITY

The non-aqueous electrolyte solution for secondary batteries and the secondary battery of the present invention have long-term flame retardancy and practically sufficient conductivity and are excellent in charge/discharge properties at a high rate and cycle properties under high voltage conditions. Therefore, they are useful for secondary batteries in various applications for e.g. mobile phones, notebook computers, electric automobiles, etc. Further, the non-aqueous electrolyte solution for secondary batteries, of the present invention, is capable of dissolving a lithium salt excellently and has sufficient conductivity and thus, it is useful also for other charging devices such as an electric double-layer capacitor, a lithium-ion capacitor, etc.

The entire disclosure of Japanese Patent Application No. 2010-164067 filed on July 21, 2010 including specification, claims, drawings and summary is incorporated herein by reference in its entirety.

## Claims

1. A non-aqueous electrolyte solution for secondary batteries, comprising a lithium salt (I) and a solvent (II), wherein
the solvent (II) comprises at least one compound (II-1) selected from the group consisting of a compound represented by the following formula (1) and a compound represented by the following formula (2), a compound (II-2A) represented by the following formula (3A), and a cyclic carbonate compound (II-3) having no carbon-carbon unsaturated bond, and
the ratio (Nₒ/N_{Li}) of the number of moles (No) of etheric oxygen atoms derived from the compound (II-2A) contained in the electrolyte solution to the number of moles (N_{Li}) of lithium atoms derived from the lithium salt (I) contained in the electrolyte solution, is more than 1 and at most 6:
R¹-O-R² (1) 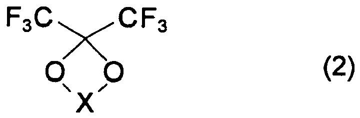 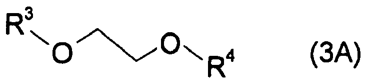
wherein each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having an etheric oxygen atom between carbon-carbon atoms, or a C₁₋₁₀ fluorinated alkyl group having an etheric oxygen atom between carbon-carbon atoms, provided that at least one of R¹ and R² is a group containing fluorine atom(s),
X is a C₁₋₅ alkylene group, a C₁₋₅ fluorinated alkylene group, a C₁₋₅ alkylene group having an etheric oxygen atom between carbon-carbon atoms, or a C₁₋₅ fluorinated alkylene group having an etheric oxygen atom between carbon-carbon atoms, and
each of R³ and R⁴ which are independent of each other, is a C₁₋₅ alkyl group, or R³ and R⁴ are linked to each other to form a C₁₋₁₀ alkylene group.

2. The non-aqueous electrolyte solution for secondary batteries according to Claim 1, wherein said Nₒ/N_{Li} is from 1.2 to 3.8.

3. The non-aqueous electrolyte solution for secondary batteries according to Claim 1 or 2, wherein the ratio (N_{II-3}/N_{Li}) of the number of moles (N_{II-3}) of the compound (II-3) to the total number of moles (N_{Li}) of lithium atoms derived from the lithium salt (I), contained in the electrolyte solution, is from 0.1 to 5.

4. The non-aqueous electrolyte solution for secondary batteries according to any one of Claims 1 to 3, wherein the ratio [(No+ N_{II-3})/ N_{Li}] of the sum (No+ N_{II-3}) of the number of moles (No) of etheric oxygen atoms derived from the compound (II-2A) and the number of moles (N_{II-3}) of the compound (II-3), to the total number of moles (N_{Li}) of lithium atoms derived from the lithium salt (I), contained in the electrolyte solution, is from 2 to 6.

5. The non-aqueous electrolyte solution for secondary batteries according to any one of Claims 1 to 4, wherein the ratio (N_{II-3}/N_{Li}) of the total number of moles (N_{II-3}) of the compound (II-3) to the total number of moles (N_{Li}) of lithium atoms derived from the lithium salt (I), contained in the electrolyte solution, is from 0.1 to 5.

6. The non-aqueous electrolyte solution for secondary batteries according to any one of Claims 1 to 5, wherein the amount of the compound (II-1) in the solvent (II) is from 40 to 85 vol% based on the total volume of the solvent (II).

7. The non-aqueous electrolyte solution for secondary batteries according to any one of Claims 1 to 6, wherein the amount of the compound (II-2A) in the solvent (II) is from 6 to 25 vol% based on the total volume of the electrolyte solution.

8. The non-aqueous electrolyte solution for secondary batteries according to any one of Claims 1 to 7, wherein the amount of the compound (II-3) in the solvent (II) is from 5 to 30 vol% based on the total volume of the solvent (II).

9. The non-aqueous electrolyte solution for secondary batteries according to any one of Claims 1 to 8, wherein the molar amount of the lithium salt (I) based on the total volume of the electrolyte solution is from 0.1 to 3.0 mol/L.

10. The non-aqueous electrolyte solution for secondary batteries according to any one of Claims 1 to 9, wherein the compound (II-1) is CF₃CH₂OCF₂CF₂H, CHF₂CF₂CH₂OCF₂CF₂H, CF₃CF₂CH₂OCF₂CHF₂, CF₃CH₂OCF₂CHFCF₃, or CHF₂CF₂CH₂OCF₂CFHCF₃.

11. The non-aqueous electrolyte solution for secondary batteries according to any one of Claims 1 to 10, wherein in the compound (II-2A), each of R³ and R⁴ which are independent of each other, is a methyl group or an ethyl group.

12. The non-aqueous electrolyte solution for secondary batteries according to any one of Claims 1 to 11, wherein the compound (II-3) is propylene carbonate, ethylene carbonate, butylene carbonate, 4-chloro-1,3-dioxolan-2-one, 4-fluoro-1,3-dioxolan-2-one or 4-trifluoromethyl-1,3-dioxolan-2-one.

13. The non-aqueous electrolyte solution for secondary batteries according to any one of Claims 1 to 12, wherein the lithium salt (I) is LiPF₆, a compound represented by the following formula (5), (FSO₂)₂NLi, (CF₃SO₂)₂NLi, (CF₃CF₂SO₂)₂NLi, LiClO₄, a compound represented by the following formula (6), a compound represented by the following formula (7), or LiBF₄: 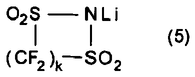 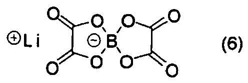 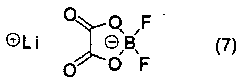 wherein k is an integer of from 1 to 5.

14. A lithium ion secondary battery using, as its electrolyte solution, the non-aqueous electrolyte solution for secondary batteries as defined in any one of Claims 1 to 13.

15. A lithium ion secondary battery comprising a negative electrode made of a material capable of absorbing and desorbing lithium ions, metal lithium or an lithium alloy, a positive electrode made of a material capable of absorbing and desorbing lithium ions, and the non-aqueous electrolyte solution for secondary batteries as defined in any one of Claims 1 to 13.
